# EUROPEAN PATENT APPLICATION

(11) **EP 4 631 650 A1**
(43) Date of publication of application: **15.10.2025**
(21) Application number: 25156890.3
(22) Date of filing: 10.02.2025
(51) Int. Cl.: B22F 10/25, B22F 12/55, B22F 12/58, B23K 9/04, B23K 26/342, B23K 35/02, B23K 35/22, B33Y 10/00, B33Y 30/00, B33Y 40/00

(54) **MULTI-PARTITION CORE WIRES WITH MULTI-MATERIAL POWDERS FOR TAILORED MATERIAL PROPERTIES IN WIRE ARC ADDITIVE MANUFACTURING (WAAM)**

(30) Priority: 23.02.2024 US 202418586238
(71) Applicant: Goodrich Corporation, Charlotte, NC 28217-4578 (US)
(72) Inventor: VOLETI, Sreenivasa R., Farmington, CT (US); STAROSELSKY, Alexander, Avon, CT (US); MIRONETS, Sergey, Burlington (CA)
(74) Representative: Dehns

(57) **Abstract**

A method of forming a metal workpiece is disclosed herein. The method includes applying a concentrated energy to a core wire (102) to form melted material, and forming a metallic component from the melted material based on the concentrated energy. The core wire (102) comprises at least two internal compartments. A first internal compartment of the at least two internal compartments comprises a first powdered material (306). A second internal compartment of the at least two internal compartments comprises a second powdered material (308). The electric current heats the core wire (102), the first powdered material (306), and the second powdered material (308) to generate the melted material.

## Description

### FIELD

The present disclosure generally relates to the utilization of core wire for producing aerospace components via wire arc additive manufacturing processes and more particularly to methods for utilizing multi-partition core wires with internal multi-material powders for tailored material properties in wire arc additive manufacturing.

### BACKGROUND

During manufacture of a part or component, a coating may be formed over a surface of the part or component. The coating may be formed from various different materials such as ceramics, polymers, or metals. A metal surface layer with functionally graded properties may substitute the metal coating application. At times, a coating formed from a specific metal is used to improve the performance of a part made from a different metal.

### SUMMARY

A method of forming a metal workpiece is disclosed herein. The method includes applying a concentrated energy to a core wire, and forming a metallic component from the melted material based on the concentrated energy. The core wire includes at least two internal compartments, where a first internal compartment of the at least two internal compartments includes a first powdered material and where a second internal compartment of the at least two internal compartments includes a second powdered material. The concentrated energy heats the core wire, the first powdered material, and the second powdered material to generate a melted material.

In various embodiments, the concentrated energy is at least one of a direct electrical current or an alternating electrical current.

In various embodiments, a first end of a concentrated energy circuit supplies an electrical current to the core wire and a second end of the concentrated energy circuit supplies the electrical current to a substrate.

In various embodiments, the core wire is composed of a first metal or metal alloy material. In various embodiments, the first powdered material is the same as the second powdered material. In various embodiments, the first metal or metal alloy material is different than the first powdered material and the second powdered material.

In various embodiments, the core wire is composed of a first metal or metal alloy material. In various embodiments, the first powdered material is the different from the second powdered material. In various embodiments, the first metal or metal alloy material is different than the first powdered material and the second powdered material.

In various embodiments, the metallic component is formed on a substrate.

In various embodiments, the melted material forms a first metal or metal alloy material. In various embodiments, the substrate is comprised of a second metal or metal alloy material. In various embodiments, the first metal or metal alloy material is the same as the second metal or metal alloy material.

In various embodiments, the melted material forms a first metal or metal alloy material. In various embodiments, the substrate is comprised of a second metal or metal alloy material. In various embodiments, the first metal or metal alloy material is different from the second metal or metal alloy material.

In various embodiments, forming the metallic component from the melted material further includes preforming a first deposition process to form a first layer on a substrate and preforming a second deposition process to form a second layer over the first layer.

Also disclosed herein is a system including a concentrated energy source, a force mechanism, a controller, and a tangible, non-transitory memory configured to communicate with the controller, the tangible, non-transitory memory having instructions stored thereon. In response to execution by the controller, cause the controller to perform operations including: commanding the concentrated energy source to apply a concentrated energy to a core wire, where the core wire includes at least two internal compartments, where a first internal compartment of the at least two internal compartments includes a first powdered material, where a second internal compartment of the at least two internal compartments includes a second powdered material, and where the concentrated energy heats the core wire, the first powdered material, and the second powdered material to generate a melted material; and forming a metallic component from the melted material based on the concentrated energy .

In various embodiments, the concentrated energy is at least one of a direct electrical current or an alternating electrical current.

In various embodiments, a first end of a concentrated energy circuit supplies an electrical current to the core wire and a second end of the concentrated energy supplied the electrical current to a substrate on which the metallic component is produced.

In various embodiments, the core wire is composed of a first metal or metal alloy material. In various embodiments, the first powdered material is the same as the second powdered material. In various embodiments, the first metal or metal alloy material is different than the first powdered material and the second powdered material.

In various embodiments, the core wire is composed of a first metal or metal alloy material. In various embodiments, the first powdered material is the different from the second powdered material. In various embodiments, the first metal or metal alloy material is different than the first powdered material and the second powdered material.

In various embodiments, the metallic component is formed on a substrate.

In various embodiments, the melted material forms a first metal or metal alloy material. In various embodiments, the substrate is comprised of a second metal or metal alloy material. In various embodiments, the first metal or metal alloy material is the same as the second metal or metal alloy material.

In various embodiments, the melted material forms a first metal or metal alloy material. In various embodiments, the substrate is comprised of a second metal or metal alloy material. In various embodiments, the first metal or metal alloy material is different from the second metal or metal alloy material.

Also disclosed herein is a method forming a metal workpiece. The method includes receiving a core including a first material, where the core wire includes at least two internal compartments, where a first internal compartment of the at least two internal compartments includes a first powdered material, and where a second internal compartment of the at least two internal compartments includes a second powdered material; applying a concentrated energy to heat the core wire, the first powdered material, and the second powdered material to generate a melted material; and forming a metallic component from the melted material.

In various embodiments, the core wire is composed of a first metal or metal alloy material. In various embodiments, the first powdered material is the same as the second powdered material. In various embodiments, the first metal or metal alloy material is different than the first powdered material and the second powdered material.

In various embodiments, the core wire is composed of a first metal or metal alloy material. In various embodiments, the first powdered material is the different from the second powdered material. In various embodiments, the first metal or metal alloy material is different than the first powdered material and the second powdered material.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a wire arc additive manufacturing (WAAM) device, in accordance with various embodiments.
FIGS. 2A, 2B, 2C, and 2D illustrate core wires with different outside geometries, with multiple compartments and including a same powdered materials in each compartment, in accordance with various embodiments.
FIGS. 3A, 3B, 3C, and 3D illustrate core wires with different outside geometries, with multiple compartments and including different powdered materials in each compartment, in accordance with various embodiments.
FIG. 4 illustrates a flow diagram of a method of forming a metal workpiece, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Wire arc additive manufacturing (WAAM) is a wire deposition process where the wire material is melted onto a surface to build up a workpiece by continuous deposition. The wire material is melted and builds up the component through electric arc heating and deposition. Traditional WAAM utilizes a simple solid metal wire. However, in various embodiments, WAAM utilizes a core wire having a circular cross-section and a hollow core, where the core is filled with powdered material of a different material from that of the core wire. This additional powdered material allows for different properties to be created in the workpiece.

Disclosed herein, in various embodiments, is a method of forming a metal workpiece via wire arc additive manufacturing (WAAM) utilizing a core wire with multiple compartments. In various embodiments, the number of compartments may be two compartments, three compartments, or four compartments, among others. In various embodiments, each of the compartments may be filled with a same powdered material different from the core material. In various embodiments, each of the compartments may be filled with different powdered material different from the core material and different from another compartment. In various embodiments, an amount of powdered material in a first compartment may vary from an amount of powdered material in a second compartment. In various embodiments, an amount of powdered material in any single compartment may vary during the manufacturing of the workpiece. In that regards, at the beginning of the manufacturing of the workpiece, an amount of powdered material in a first compartment may exceed an amount of material in a second compartment by a ratio of 10:1. A quarter of the way through the manufacturing of the workpiece, the amount of powdered material in a first compartment may be reduced and/or the amount of material in a second compartment may be increased such that the ratio is 5:1. Half way through the manufacturing of the workpiece, the amount of powdered material in a first compartment may be equal to the amount of material in a second compartment such that the ratio is 1:1. Three quarters of the way through the manufacturing of the workpiece, the amount of powdered material in a first compartment may be reduced and/or the amount of material in a second compartment may be increased such that the ratio is 1:5. Towards an end of the manufacturing of the workpiece, the amount of powdered material in a first compartment may be much less than the amount of material in a second compartment such that the ratio is 1:10. In carious embodiments, an amount of material in each compartment may vary even greater when three, four, or more compartments within the core wire are utilized. In various embodiments, the shape of the core wire may also vary from typical core wire. In that regard, the shape of the core wire may be rectangular, elliptical, round, or square, among others.

In various embodiments, the core wire with multiple compartments is heated utilizing a concentrated energy, i.e., a direct electric current or alternating electric current. In that regard, in various embodiments, the core wire is fed through a set of feed rollers and through a nuzzle near the substrate where the component is to be additively manufactured. In various embodiments, the electric current passing through the core wire via the feed rollers melts the core wire onto the substrate. In various embodiments, the substrate sits on a platform and the controller controls the substrate to cause the substrate to travel back-and-forth, longitudinally, laterally, or both longitudinally and laterally, thereby controlling the deposition rate and the geometry of the workpiece to be manufactured. In various embodiments, the nozzle through which the core wire is fed may be installed on a movable system such as a gantry system or robotic arm system, among others. In various embodiments, the controller manipulates the movable system to control the deposition rate and the geometry of the weld path on a stationary substrate. In various embodiments, a gas may be applied to the workpiece around the point of the weld as a shielding gas to reduce or prevent oxidation, increase corrosion resistance, and/or increase a toughness at the surface (or interior) of the workpiece during the welding process.

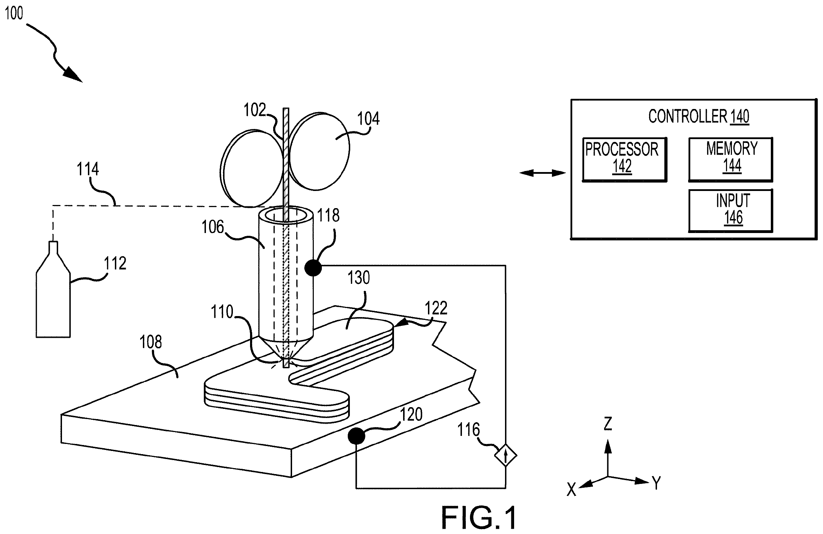

Referring now to FIG. 1, a wire arc additive manufacturing (WAAM) device 100 is illustrated, in accordance with various embodiments. In various embodiments, a core wire 102 may be fed into the WAAM device 100 via feeders 104. In various embodiments, the core wire 102 has a hollow core with multiple compartments. In various embodiments, the number of compartments within the core wire 102 may be two compartments, three compartments, or four compartments, among others. In various embodiments, the feeders 104 are a set of wheels, with one wheel of the set of wheels rotating in a clockwise direction and the other wheel of the set of wheels rotating in a counterclockwise direction providing a downward force, i.e. in a negative z-direction, feeding the core wire 102 into the aperture 106. In various embodiments, the feeders 104 that may be configured to deliver the core wire 102 at a rate of 0.5 in/min [1.27 cm/min] to 25 in/min [63.5 cm/min] and may have deposition rates between 1 and 20 lbs/hour [0.45 and 9 kg/hr].

In various embodiments, the core wire 102 may be loaded in the WAAM device 100 configured to receive the core wire 102. The WAAM device 100 may include hardware and/or software configured to perform additive manufacturing of an aerospace component. In various embodiments, additive manufacturing may include wire arc additive manufacturing. In various embodiments, the WAAM device 100 may be configured to melt the core wire 102 on a substrate 108. In that regard, in various embodiments, as the core wire 102 is fed through the aperture 106, a concentrated energy source 116 of coupled to the aperture 106 at a first end via a first contact 118 and to the substrate 108 at a second end via a second contact 120 such that the concentrated energy passes though aperture 106, the core wire 102, the previously laid layers 122, and the substrate 108. In various embodiments, the concentrated energy source 116 is one of a direct electrical current or an alternating electrical current. In various embodiments, the concentrated energy source 116 heats the core wire 102 to a first temperature. In various embodiments, the deposition of the melted core wire 102 on the substrate 108 may be performed in a protective atmosphere, i.e. using an inert gas shield 110. In various embodiments, the inert gas 112 may be helium (He) or argon (Ar), a less reactive gas such as nitrogen (N₂), among others, and may be feed via conduit 114 into aperture 106.

The WAAM device 100 further includes a controller 140 that is in communication with various components of the WAAM device 100, such as the feeders 104, the aperture 106, the substrate 108, the inert gas 112, and the concentrated energy source 116. Controller 140 may include one or more processors 142 configured to implement various logical operations in response to execution of instructions, for example, instructions stored on a non-transitory, tangible, computer-readable medium. The one or more processors can be a general-purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof.

Controller 140 may further include a memory 144 to store data, executable instructions, system program instructions, and/or controller instructions to implement the control logic of controller 140. Memory 144 may further store a database, a look up table, and/or other data objects for use by the executable instructions for implementing the control logic of controller 140. System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

Controller 140 may further include an input 146. In various embodiments, input 146 may be a bus or communication protocol with another device. In various embodiments, input 146 may be a touch screen, keyboard, and/or other input device located on the feeders 104, the aperture 106, the substrate 108, the inert gas 112, and the concentrated energy source 116. In various embodiments, input 146 may be a network connection for receiving inputs via a network connected device.

Controller 140 is configured to communicate with and control the feeders 104, the aperture 106, the substrate 108, the inert gas 112, and the concentrated energy source 116. Controller 140 may send instructions to the feeders 104, the aperture 106, the substrate 108, the inert gas 112, and the concentrated energy source 116 to control the working parameters of the feeders 104, the aperture 106, the substrate 108, the inert gas 112, and the concentrated energy source 116. In various embodiments, the instructions may be stored in memory 144 as a computer numerical control (CNC) program. In various embodiments, the working parameters may include the downward force applied to the core wire 102 by the feeders 104. In various embodiments, the working parameters may include electric current applied to the aperture 106 by the concentrated energy source 116 and thus to the core wire 102 to melt the core wire 102 and the powdered material within. In various embodiments, the working parameters may include the movement of the substrate 108 that causes the substrate 108 to travel back-and-forth, longitudinally, laterally, or both longitudinally and laterally, thereby controlling the deposition rate and the geometry of the workpiece to be manufactured on the substrate 108. In various embodiments, the aperture 106 through which the core wire 102 is fed along with the feeders 104 and the conduit 114 may be installed on a movable system such as a gantry system or robotic arm system, among others. In various embodiments, the working parameters may include the movement of the movable system to control the deposition rate and the geometry of the weld path on a stationary substrate 108.

In various embodiments, controller 140 may use the input information to determine the working parameters to send to the feeders 104, the aperture 106, the substrate 108, the inert gas 112, and the concentrated energy source 116. In various embodiments, controller 140, and, more specifically, memory 144, may store a database of working parameters for the core wire 102. For example, controller 140 may send a first set of working parameters to the feeders 104, the aperture 106, the substrate 108, the inert gas 112, and the concentrated energy source 116 in response to the input indicating that the core wire 102 is formed from a first alloy having a first core material and having a first set of powdered materials in the compartments of the core wire 102. In that regard, the core wire 102 may be a metal or metal alloy, such as aluminums, steels, or titaniums, among others. In various embodiments, the powdered material may be nickel based super alloy or chromium, among others. As another example, controller 140 may send a second set of working parameters, with at least one parameter being different, to the feeders 104, the aperture 106, the substrate 108, the inert gas 112, and the concentrated energy source 116 in response to the input indicating a second core material and having a second set of powdered materials in the compartments of the core wire 102.

By adjusting the working parameters (e.g., downward force on the core wire, applied electric current, movement of the substrate or the movable system, etc.) for different core materials and different powdered materials, controller 140, the feeders 104, the aperture 106, the substrate 108, the inert gas 112, and the concentrated energy source 116 may deposit melted material with tailored properties having different thicknesses which improves the quality of the workpiece while reducing the cost of the workpiece. Adjusting the working parameters of the feeders 104, the aperture 106, the substrate 108, the inert gas 112, and the concentrated energy source 116 by the controller 140 allows for a uniform and consistent workpiece. Additionally, each layer of the workpiece may be controlled to be a precise thickness to avoid material waste associated with forming a thick workpiece and machining the workpiece to a thinner, desired, thickness. Additional machining (e.g., grinding, sanding, etc.) may be performed to reduce the layer to the desired thickness.

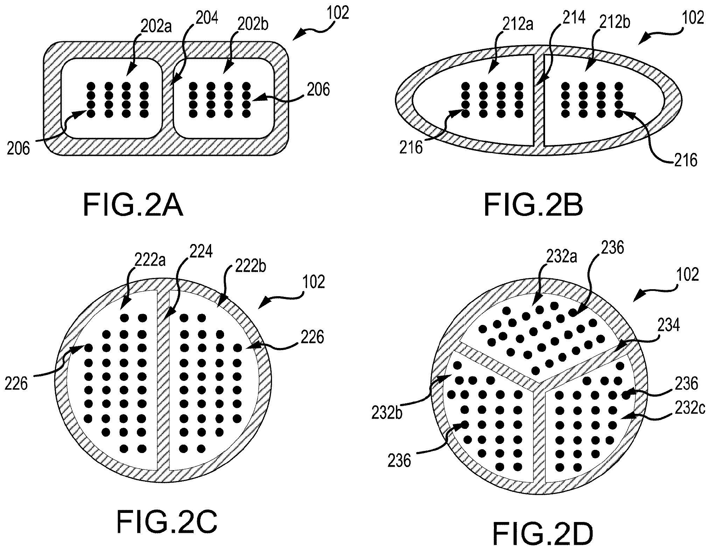

Referring now to FIGS. 2A, 2B, 2C, and 2D, core wires with different outside geometries, with multiple compartments and including a same powdered material in each compartment are illustrated, in accordance with various embodiments. With reference to FIG. 2A, core wire 102 has a rectangular configuration with two compartments 202a, 202b divided by a divider 204. In various embodiments, each compartment may be filled with a same powdered material 206 that is different from the core material of core wire 102 and divider 204. With reference to FIG. 2B, core wire 102 has an oval or elliptical configuration with two compartments 212a, 212b divided by a divider 214. In various embodiments, each compartment may be filled a same powdered material 216 that is different from the core material of core wire 102 and divider 214. With reference to FIG. 2C, core wire 102 has a circular configuration with two compartments 222a, 222b divided by a divider 224. In various embodiments, each compartment may be filled a same powdered material 226 that is different from the core material of core wire 102 and divider 224. With reference to FIG. 2D, core wire 102 has a circular configuration with three compartments 232a, 232b, 232c divided by a dividers 234. In various embodiments, each compartment may be filled with a same powdered material 236 that is different from the core material of core wire 102 and dividers 234. While only rectangular, oval, elliptical, and circular shapes are illustrated, the illustrative embodiments, are not limited to only this configurations. In that regard, a shape of the core wire 102 may have other configuration such as octagonal, hexagonal, or pentagonal, among others. In various embodiments, the melted material generated by passing an electric current through the core wire and heating the core wire 102 together with the powdered material 206, 216, 226, or 236 may generate a first type of metal that may be a same metal as substrate 108 or a different type of metal from substrate 108.

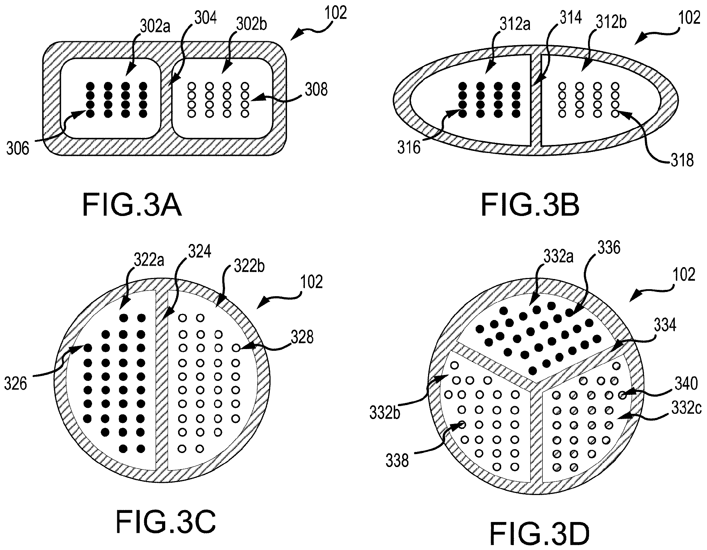

Referring now to FIGS. 3A, 3B, 3C, and 3D, core wires with different outside geometries, with multiple compartments and including different powdered material in each compartment are illustrated, in accordance with various embodiments. With reference to FIG. 3A, core wire 102 has a rectangular configuration with two compartments 302a, 302b divided by a divider 304. In various embodiments, compartment 302a may be filled a first powdered material 306 and compartment 302b may be filled with a second powdered material 308 that is different from the first powdered material 306. In various embodiments, the first powdered material 306 and the second powdered material 308 are both different from the core material of core wire 102 and divider 304. With reference to FIG. 3B, core wire 102 has an oval or elliptical configuration with two compartments 312a, 312b divided by a divider 314. In various embodiments, compartment 312a may be filled with a first powdered material 316 and compartment 312b may be filled with a second powdered material 318 that is different from the first powdered material 316. In various embodiments, the first powdered material 316 and the second powdered material 318 are both different from the core material of core wire 102 and divider 314. With reference to FIG. 3C, core wire 102 has a circular configuration with two compartments 322a, 322b divided by a divider 324. In various embodiments, compartment 322a may be filled a first powdered material 326 and compartment 322b may be filled with a second powdered material 328 that is different from the first powdered material 326. In various embodiments, the first powdered material 326 and the second powdered material 328 are both different from the core material of core wire 102 and divider 324. With reference to FIG. 3D, core wire 102 has a circular configuration with three compartments 332a, 332b, 332c divided by a dividers 334. In various embodiments, compartment 332a may be filled a first powdered material 336, compartment 322b may be filled with a second powdered material 338 that is different from the first powdered material 336, and compartment 322c may be filled with a third powdered material 340 that is different from the first powdered material 336 and the second powdered material 338. In various embodiments, the first powdered material 336, the second powdered material 338, and the third powdered material 340 are all different from the core material of core wire 102 and dividers 334. While only rectangular, oval, elliptical, and circular shapes are illustrated, the illustrative embodiments, are not limited to only this configurations. In that regard, a shape of the core wire 102 may have other configuration such as octagonal, hexagonal, or pentagonal, among others. In various embodiments, the melted material generated by passing an electric current through the core wire and heating the core wire 102 together with the powdered material 306 and 308, 316 and 308, 326 and 328, or 336 and 338 may generate a first type of metal that may be a same metal as substrate 108 or a different type of metal from substrate 108.

In various embodiments, throughout a length of the core wire 102, an amount of powdered material in any single compartment may vary during the manufacturing of the workpiece. In that regards, at the beginning of the manufacturing of the workpiece, an amount of powdered material in a first compartment may exceed an amount of material in a second compartment by a ratio of 10:1. A quarter of the way through the manufacturing of the workpiece, the amount of powdered material in a first compartment may be reduced and/or the amount of material in a second compartment may be increased such that the ratio is 5:1. Half way through the manufacturing of the workpiece, the amount of powdered material in a first compartment may be equal to the amount of material in a second compartment such that the ratio is 1:1. Three quarters of the way through the manufacturing of the workpiece, the amount of powdered material in a first compartment may be reduced and/or the amount of material in a second compartment may be increased such that the ratio is 1:5. Towards an end of the manufacturing of the workpiece, the amount of powdered material in a first compartment may be much less than the amount of material in a second compartment such that the ratio is 1:10. In carious embodiments, an amount of material in each compartment may vary even greater when three, four, or more compartments within the core wire are utilized.

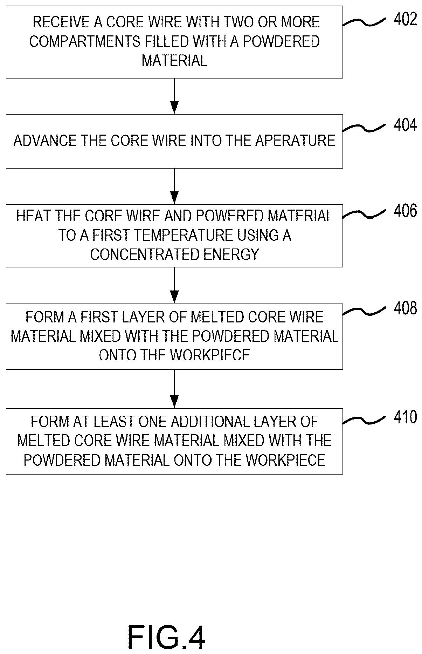

Referring now to FIG. 4, a flow diagram of a method 400 for forming a metal workpiece is illustrated in accordance with various embodiments. At block 402, wire arc additive manufacturing (WAAM) device receives a core wire with two or more compartments filled with a powdered material. At block 404, the WAAM device advances the core wire into the aperture. At block 406, the WAAM device heats the core wire and the powdered material contained therein to a first temperature using a concentrated energy. At block 408, the WAAM device forms a first layer of melted core wire material mixed with the powdered material onto the workpiece, the first layer having a first thickness. At block 410, the WAAM device forms at least one additional layer of melted core wire material mixed with the powdered material onto the workpiece, the at least one additional layer having a respective thickness.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A method for forming a metal workpiece, comprising:
applying a concentrated energy to a core wire (102), wherein the core wire (102) comprises at least two internal compartments, wherein a first internal compartment of the at least two internal compartments comprises a first powdered material (306), wherein a second internal compartment of the at least two internal compartments comprises a second powdered material (308), and wherein the concentrated energy heats the core wire (102), the first powdered material (306), and the second powdered material (308) to generate a melted material; and
forming a metallic component from the melted material based on the concentrated energy.

2. The method of claim 1, wherein the concentrated energy is at least one of a direct electrical current or an alternating electrical current.

3. The method of claim 1 or 2, wherein a first end of a concentrated energy circuit supplies an electrical current to the core wire (102) and a second end of the concentrated energy circuit supplies the electrical current to a substrate.

4. The method of any preceding claim, wherein the core wire (102) is composed of a first metal or metal alloy material, wherein the first powdered material (306) is the same as the second powdered material (308), and wherein the first metal or metal alloy material is different than the first powdered material (306) and the second powdered material (308).

5. The method of any of claims 1-3, wherein the core wire (102) is composed of a first metal or metal alloy material, wherein the first powdered material (306) is the different from the second powdered material (308), and wherein the first metal or metal alloy material is different than the first powdered material (306) and the second powdered material (308).

6. The method of any preceding claim, wherein the metallic component is formed on a substrate.

7. The method of claim 6, wherein the melted material forms a first metal or metal alloy material, wherein the substrate is comprised of a second metal or metal alloy material, and wherein the first metal or metal alloy material is the same as the second metal or metal alloy material.

8. The method of claim 6, wherein the melted material forms a first metal or metal alloy material, wherein the substrate is comprised of a second metal or metal alloy material, and wherein the first metal or metal alloy material is different from the second metal or metal alloy material.

9. The method of any preceding claim, wherein forming the metallic component from the melted material further comprises:
preforming a first deposition process to form a first layer on a substrate; and
preforming a second deposition process to form a second layer over the first layer.

10. A system, comprising:
a concentrated energy source (116);
a force mechanism;
a controller (140); and
a tangible, non-transitory memory configured to communicate with the controller (140), the tangible, non-transitory memory having instructions stored thereon that, in response to execution by the controller (140), cause the controller (140) to perform operations comprising:
commanding the concentrated energy source (116) to apply a concentrated energy to a core wire (102), wherein the core wire (102) comprises at least two internal compartments, wherein a first internal compartment of the at least two internal compartments comprises a first powdered material (306), wherein a second internal compartment of the at least two internal compartments comprises a second powdered material (308), and wherein the concentrated energy heats the core wire (102), the first powdered material (306), and the second powdered material (308) to generate a melted material; and
forming a metallic component from the melted material based on the concentrated energy.

11. The system of claim 10, wherein the concentrated energy is at least one of a direct electrical current or an alternating electrical current; or
wherein a first end of a concentrated energy circuit supplies an electrical current to the core wire (102) and a second end of the concentrated energy circuit supplies the electrical current to a substrate on which the metallic component is produced; or
wherein the core wire (102) is composed of a first metal or metal alloy material, wherein the first powdered material (306) is the same as the second powdered material (308), and wherein the first metal or metal alloy material is different than the first powdered material (306) and the second powdered material (308); or
wherein the core wire (102) is composed of a first metal or metal alloy material, wherein the first powdered material (306) is the different from the second powdered material (308), and wherein the first metal or metal alloy material is different than the first powdered material (306) and the second powdered material (308).

12. The system of claim 10 or 11, wherein the metallic component is formed on a substrate.

13. The system of claim 12, wherein the melted material forms a first metal or metal alloy material, wherein the substrate is comprised of a second metal or metal alloy material, and wherein the first metal or metal alloy material is the same as the second metal or metal alloy material; or
wherein the melted material forms a first metal or metal alloy material, wherein the substrate is comprised of a second metal or metal alloy material, and wherein the first metal or metal alloy material is different from the second metal or metal alloy material.

14. A method of forming a metal workpiece, comprising:
receiving a core wire (102) comprising a first material, wherein the core wire (102) comprises at least two internal compartments, wherein a first internal compartment of the at least two internal compartments comprises a first powdered material (306), and wherein a second internal compartment of the at least two internal compartments comprises a second powdered material (308);
applying a concentrated energy to heat the core wire (102), the first powdered material (306), and the second powdered material (308) to generate a melted material; and
forming a metallic component from the melted material.

15. The method of claim 14, wherein the core wire (102) is composed of a first metal or metal alloy material, wherein the first powdered material (306) is the same as the second powdered material (308), and wherein the first metal or metal alloy material is different than the first powdered material (306) and the second powdered material (308); or
wherein the core wire (102) is composed of a first metal or metal alloy material, wherein the first powdered material (306) is the different from the second powdered material (308), and wherein the first metal or metal alloy material is different than the first powdered material (306) and the second powdered material (308).
